# EUROPEAN PATENT APPLICATION

(11) **EP 1 251 227 A2**
(43) Date of publication of application: **23.10.2002**
(21) Application number: 02100076.5
(22) Date of filing: 29.01.2002
(51) Int. Cl.: E05F 15/16, B60J 7/057

(54) **Window opening/closing control system**

(30) Priority: 31.01.2001 JP 2001024220; 31.01.2001 JP 2001024221
(71) Applicant: Mazda Motor Corporation, Aki-gun, Hiroshima (JP)
(72) Inventor: Harada, Tukasa, Fucho-cho, Aki-gun, Hiroshima (JP); Oka, Takuji, Fucho-cho, Aki-gun, Hiroshima (JP); Okada, Haruhisa, Fucho-cho, Aki-gun, Hiroshima (JP); Jahara, Kouji, Fucho-cho, Aki-gun, Hiroshima (JP)
(74) Representative: Messulam, Alec Moses

(57) **Abstract**

A window opening control system for a vehicle comprises a window glass (1a) for opening/closing a door or roof window (1) of the vehicle (100), a motor (16) for causing opening/closing movement of the window glass (1a), window opening/closing switches (2-5 and 10) for causing the opening/closing movement of the window glass (1a), pulser and limit switch (8, 9) for detecting an opening position of the window glass (1a), and control means (12) for controlling the motor (16) to cause opening/closing movement of the window glass (1a) according to operations of the window opening/closing switches (2-5 and 10) and the opening position detected by the position detection means (8, 9). The control means (12) controls the motor (16) to stop so as to cause a momentary pause of movement of the window glass (1a) for a specified pause period or to completely halt the window glass (1a) at a specified preparatory distance at one try of an operation of one of the window opening/closing switches (2-5, 10) and changes the specified opening distance according to a specific first operation.

## Description

The present invention relates to a window opening/closing control system for a vehicle which causes a momentary pause of movement of an opening/closing member of a door window or a roof window following a preparatory down movement of the opening/closing member at one try of operation.

There has been proposed a door window system for a door window or a roof window of a vehicle that causes movement of a window glass to a specified opening position, namely a preparatory opening position, and stop the window glass at the specified opening position when a power window switch is operated once such as described in, for example, Japanese Unexamined Patent Publication No. 60-23575. This prior art window system opens the window glass to the specified opening position irrespective of an operated time of the power window switch when the power window switch is operated within a specified period of time.

Further, there has been proposed a power window system that controls a window motor so as to cause rotation for movement of a window glass to preparatory opening position and, after a momentary pause, continuous rotation for movement of the window glass to a desired opening position or a full opening position when a power window switch is operated once or controls a window motor so as to cause movement of a window glass at a low speed at the beginning and, thereafter, at a normal speed when a power window switch is operated once. According to this power window system, even though the power window switch is continuously operated, the window glass temporarily stops at the preparatory opening position after a lapse of a specified time and resumes further moving from the preparatory opening position.

These prior art power window systems do not allow alteration of the preparatory opening position of the window glass at one try by an occupant, a driver or a passenger, so that, in the case of the power window system incorporated into a door window, it is impossible to change the preparatory opening position of the window glass according to presence or absence of a side visor or rain visor.

With a view to mitigating the foregoing disadvantage, the present invention provides a window opening control system for a vehicle including an opening/closing member for opening and closing a window of the vehicle, opening/closing means for causing opening/closing movement of the opening/closing member, manually operated switch means for causing the opening/closing movement of the opening/closing member, opening detection means for detecting an opening of the opening/closing member, and control means for controlling said opening/closing means to cause said opening/closing movement of the opening/closing member according to operations of said manually operated switch means and said opening detected by said position detection means, wherein said control means controls said opening/closing means to stop for a momentary pause of movement of the opening/closing member for a specified pause period of time or to completely halt of movement of the opening/closing member at a specified opening at one try of operations of said manually operated switch means and changes said specified opening according to a specific first operation.

In the preferred embodiment of the invention, the manually operated switch means comprises an ignition switch and a manual window opening switch, a manual window closing switch, an automatic window opening switch and an automatic window closing switch. The opening detection means may comprise a pulser operative to provide an output signal according to an opening position of the opening/closing member that is detected by, for example, a potentiometer, and a limit switch operative to detect an upper extreme position or fully closed position of the opening/closing member.

According to the window opening/closing control system, the opening/closing member is paused or completely halted following preparatory down movement of the opening/closing member to the specified opening position at one try of an operation of one of the manually operated switch means. In addition, the specified opening position can be desirably altered through the specific first operation. This makes it possible to alter an preparatory opening of a window glass so as to meet various types of door windows such as a door window equipped with a side visor or rain visor and a door window equipped with no side visor or rain window. In addition, the window opening/closing control system can vary or cancel the momentary pause following the preparatory down movement of the opening/closing member. This makes the specific first operation for alteration of the preparatory opening position or distance easy to be done.

A specific one of the window opening/closing switches can be employed to perform the specific first operation for alteration of the preparatory opening position or distance, there is no necessity of providing a special operating means.

The window opening/closing control system may alter the specified preparatory opening or distance only when the specific first operation is commenced before expiration of the specified first period of time after the specified second operation and the specified third operation is made before expiration of the specified second period of time after the specified first operation.

According to this embodiment, alteration of the specified preparatory opening or distance is enabled upon satisfaction of two conditions, namely that the specific first operation is commenced before expiration of the specified first period of time after the specified second operation and that the specified third operation is made before expiration of the specified second period of time after the specified first operation. This reliably avoids unintended alteration of the preparatory opening or distance due to an erroneous operation. Though the specified second and third operations may be different, when they are the same, alteration of the preparatory opening position or distance is quite manageable.

The window opening/closing control system may change a functional mode between cancellation mode for cancelling the momentary pause or a complete halt following the preparatory opening of the opening/closing member through the specific fourth operation and an execution mode for changing the pause period of time or the complete stop.

According to this embodiment, the execution mode and the cancellation mode are voluntarily selected, the window opening/closing control system is quite easy to be manipulated and is modifiable according to situations of destination countries and localities. The specific fourth operation may be made through one or more of the window opening/losing switches. This avoids the necessity of providing a special operating member for mode transition.

The window opening/closing control system may replace the preparatory opening distance with a predetermined lower limit opening distance when the preparatory opening distance is shorter that the predetermined lower limit opening distance or with a predetermined upper limit opening when the preparatory opening distance is longer that the predetermined upper limit opening.

According to this embodiment, the preparatory opening distance is restricted between upper and lower guard values, as a result of which the door window is prevented from whistling due to too small preparatory window opening and from being unexpectedly opened too small or too large.

The invention will now be described further, by way of example, with reference to the accompanying drawings, in which :
Figure 1 is a block diagram of a control circuit forming a part of a window opening/closing control system in accordance with a preferred embodiment of the present invention;
Figure 2 is a perspective view of a vehicle equipped with the window opening/closing control system;

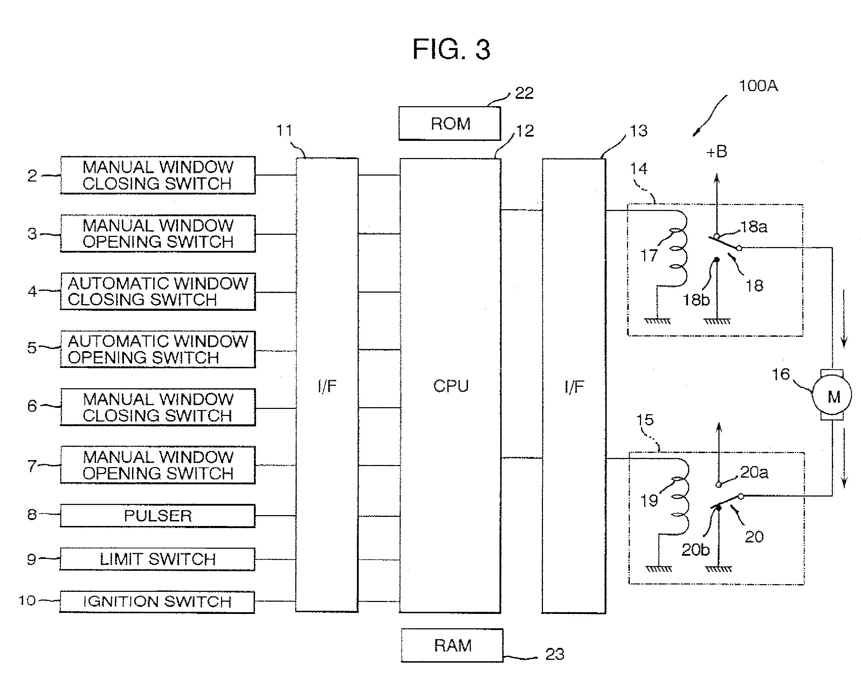

Figure 3 is a block diagram of the control circuit in a state where a window is closed;
Figure 4 is a block diagram of the control circuit in a state where a door window is opened;
Figure 5 is a diagram illustrating a preparatory window opening function of the window opening/closing control system;
Figures 6 to 11 are time charts showing the preparatory window opening function;
Figure 12 is a block diagram illustrating functional mode transition for the preparatory window opening among execution modes in which a momentary pause or a completely stop of movement of a window glass is effected following the preparatory down movement of the window glass and cancellation modes in which the preparatory window opening function including the momentary pause or a complete stop is cancelled.
Figure 13 is a time chart illustrating an operation for providing the cancellation modes;
Figure 14 is a time chart illustrating an operation for alteration of a preparatory opening distance;
Figure 15 is a block diagram showing a specific operation X;
Figure 16 is a block diagram showing a specific operation Y;
Figure 17A to 17I are respective parts of a flow chart of a sequence routine of window opening/closing control; and
Figure 18 is a block diagram showing variant of the specific operation Y.

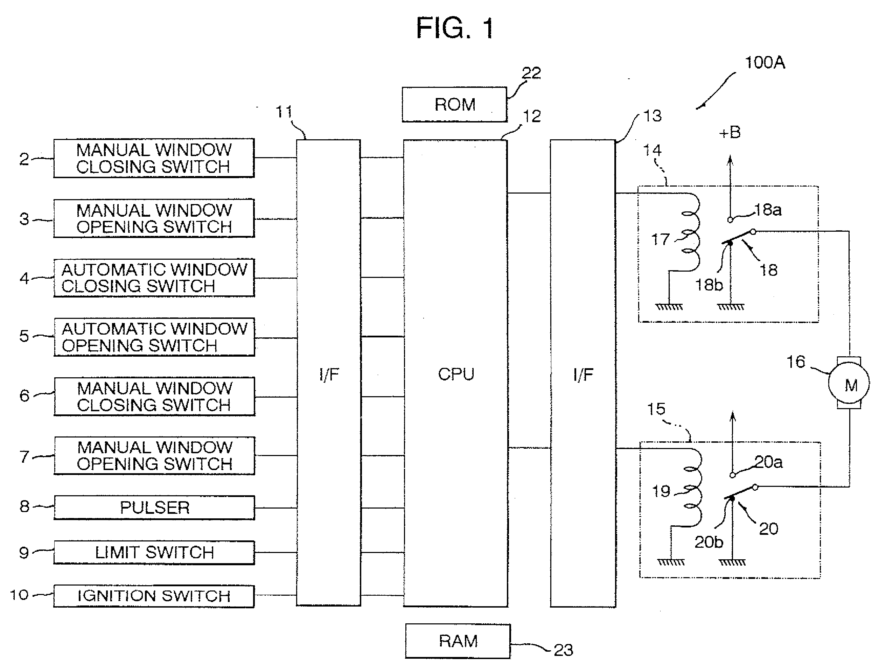

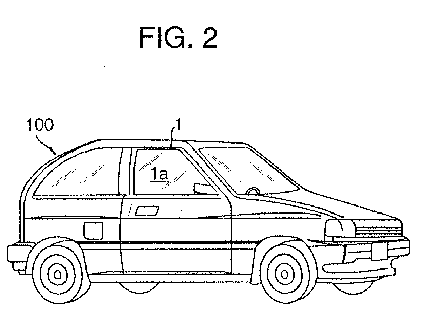

Referring to the drawings in detail, Figures 1 and 2 schematically illustrates a window opening/closing control system for an automotive vehicle 100, such as window opening/closing control system 100A, according to an embodiment of the present invention, the window opening/closing control system 100A comprises various window switches including a manual window closing switch 2 for manually moving up an opening/closing member, namely a window glass 1a, to close a front door window 1 adjacent to a driver's seat (not shown), a manual window opening switch 3 for manually moving down the window glass 1a to open the front door window 1, an automatic window closing switch 4 for automatically moving up the window glass 1a to close the front door window 1, and an automatic window opening switch 5 for automatically moving down the window glass 1a to open the front door window 1, which are disposed near the driver's seat. The window opening/closing control system 100A further comprises a manual window closing switch 6 for manually moving up a window glass of a door window (hidden in Figure 2) adjacent to a front passenger's seat (not shown) and a manual opening switch 7 for manually moving up the window glass to open the door window, which are disposed near the front passenger's seat. In addition, the window opening/closing control system 100A comprise a pulser 8 operative to provide an output signal representative of a position or an opening of the window glass 1a that is detected by means of a window position sensor such as a potentiometer, and a limit switch 9 operative to turn on when the window glass 1a is at its upper extreme position or fully closed position and to turn off while the window glass 1a is out of the upper extreme position. These pulser 8 and limit switch 9 form position detection means for detecting an opening of the window glass 1a. The window opening/closing control system 100A includes a processor or microcomputer (CPU) 12 accompanied by input and output interfaces 11 and 13. The window opening/closing switches 2-7 and 9 and the pulser 8 are electrically connected to the CPU 12 through the input interface 11. In addition, an ignition switch 10 is also connected to the CPU 12 through the input interface 13.

The window opening/closing control system 100A further comprises a pair of relay circuits 14 and 15 electrically connected to the CPU 12 through the output interface 13. An opening/closing means for moving up and down the window glass 1a, such as a reversible motor 16 is disposed between the relay circuits 14 and 15. The relay circuit 14, which actuates the reversible motor 16 to move down the window glass 1a to open the front door window 1, comprises a relay coil 17 and a relay switch 18 connected to a power source B at a contact 18a and grounded at a contact 18b. When the relay coil 17 is energised, the relay switch 18 is brought into contact with the contact 18a so as to cause the reversible motor 16 to rotate in a normal direction, thereby moving down the window glass 1a to open the front door window 1. Similarly, the relay circuit 15, which actuates the reversible motor 16 to move up the window glass 1a to close the front door window 1, comprises a relay coil 19 and a relay switch 20 connected to a power source B at a contact 20a and grounded at a contact 20b. When the relay coil 19 is energised, the relay switch 20 is brought into contact with the contact 20a so as to cause the reversible motor 16 to rotate in a reverse direction, thereby moving up the window glass 1a to close the front door window 1.

The CPU 12 receives output signals from the window opening/closing switches 2-7, 9 and 10 and the pulser 8 and controls operation of the reversible motor 16 according to the incoming output signals under a programmed control entered in ROM 22. Various data necessary for the window opening/closing control system 100A to execute the programmed control are entered in RAM 23. The data include at least flags Fy and F, which will be described later and data for limiting a specified preparatory opening distance L to a shorter allowable or limit distance in order to prevent the door window 1 from whistling and to a longer allowable or limit distance in order to limit a preparatory window opening of the door window 1 within an appropriate extent. In this instance, the window opening/closing control system 100A may include the same elements as the relay circuits 14 and 15 and the reversible motor 16 for each of the other door windows, namely a front door window at a front passenger side and rear door windows.

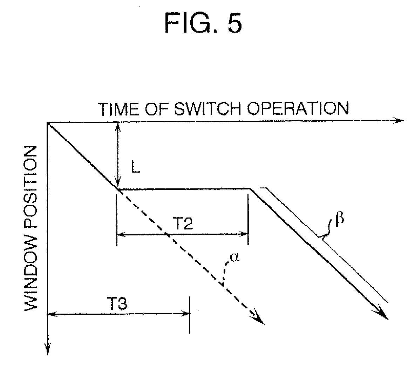

The CPU 12 performs, as one of its centre functions, a preparatory window opening function that controls the reversible motor 16 so as to vary an opening of the window glass 1, in other words an open position of the window glass 1a, according to manual operations of the respective switches 2-5 and 10 and a result of detection of an opening of the door window 1 by the opening detection means (pulser 8 and limit switch 9). As shown in Figure 5, the preparatory window opening function is such that, when operating either one of the window opening/closing switches 2-5 and 10, for example the manual window opening switch 3, the window glass 1a is forced to move a specified preparatory opening distance L at one try and then is brought into a momentary pause for a specified period of time (which is referred to as a momentary pause period of time) T2 or a complete halt following the preparatory down movement of the window glass 1a. The specified preparatory opening distance L, that is slightly short, for example 30±4 mm, is a distance by which the window glass 1a is automatically moved down from its top extreme position or fully closed position at one try of an operation of the manual window opening switch 3. The momentary pause period of time T2 is set to, for example, 1.5±0.1 seconds from the end of the preparatory down movement of the window glass 1a. In performing the preparatory window opening function, a pause inhibition period of time T3 is established in order to cancel the momentary pause period of time T2 when the window glass 1a fails to reach the specified preparatory opening distance L before expiration of the pause inhibition period of time T3 due to some reasons such as deterioration of the reversible motor 16 and the like and to allow the window glass 1a to continuously move down as shown by a chained line *á* in Figure 5. The pause inhibition period pf time T3 is set to, for example, 1.5±0.5 seconds.

The preparatory window opening function is effected only by operation of the manual window opening switch 3 while the limit switch 9 remains off. However, even though the preparatory window opening function is being implemented, upon an occurrence of operation of either one of the window opening/closing switches 2, 4 and 5 or upon a demand for an automatic reverse of movement of the window glass 1a that is caused in response to a jam of the window glass 1a, the function resulting from the operation of the operated window switch is given priority. The term "jam" as used herein is referred to an accidental halt of the window glass 1a during the preparatory down movement of the window glass 1a or movement of the window glass to the fully open position or to the fully closed position.

The preparatory window opening function remains effective during running-on of an operation timer interlocked with a turn-off operation of the ignition switch 10. Specifically, when the ignition switch 10 is operated to stop the engine, the operation timer is activated and runs on for a specified period of time, for example 40 seconds in this embodiment, so as to keep the preparatory window opening function effective even after an engine stop. This makes the preparatory window opening function effective so as to meet a demand for opening the door window 1 by moving the window glass 1a by the specified preparatory opening distance L even after an engine stop in, for example, the summer season.

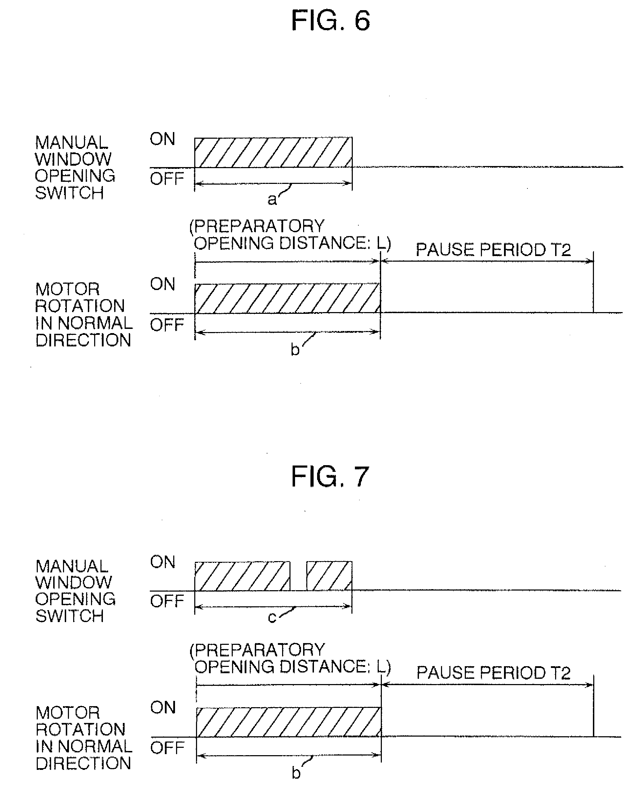

Figures 6 to 11 are time charts showing the preparatory window opening function with respect to various possible operation states of the manual window opening switch 3. The preparatory window opening function is implemented in response to a turn on operation of the manual window opening switch 3.

Figure 6 shows an event where the preparatory window opening function continuously remains effective until the window glass 1a completes the preparatory down movement even after termination of the turn on operation of the manual window opening switch 3. That is, the reversible motor 16 remains alive to rotate in the normal direction for a period of time *b* necessary for the window glass 1a to move the specified preparatory opening distance L even though a period of time *a* for which the turn on operation of the manual window switch 3 continues is shorter than the period of tome *b.*

Figure 7 shows an event where the manual window opening switch 3 is repeatedly turned on and off, for example twice in this embodiment, in a period of time *c* that is shorter than the period of time *b* for the preparatory down movement of the window glass 1a. This indicates that, as long as the period of time *c* for operation of the manual window opening switch 3 is shorter than the period of time *b,* the number of turn on and off operations of the manual window opening switch 3 does not affect on implementation of the preparatory window opening function.

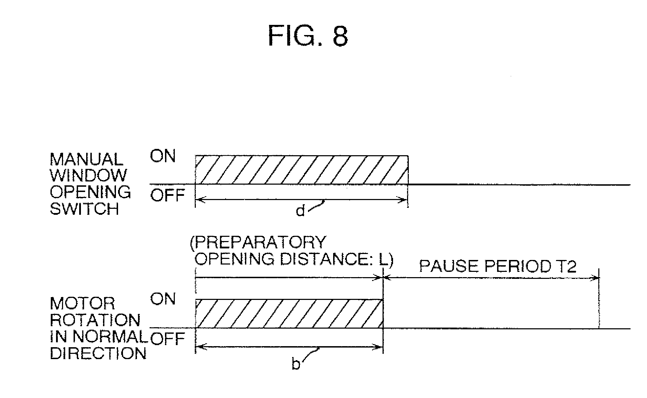

Figure 8 shows an event where the manual window opening switch 3 is kept turned on for a period of time d longer than the period of time *b* for the preparatory down movement of the window glass 1a. In this event, the preparatory window opening function terminates when the window glass 1a moves the specified preparatory opening distance L and does not resume even though the manual window opening switch 3 remains turned on a little over the period of time *b* for the preparatory down movement of the window glass 1a.

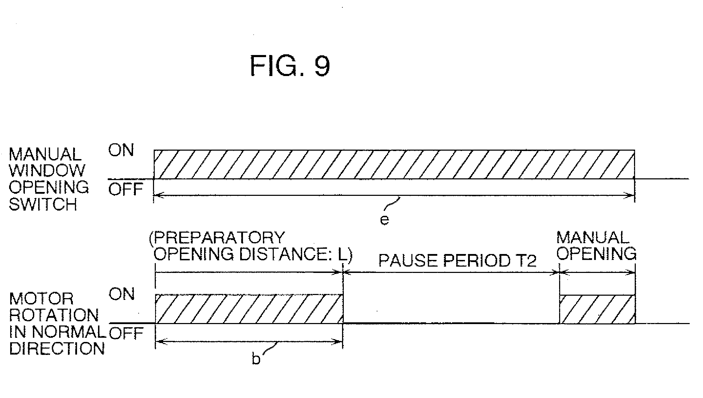

Figure 9 shows an event where the manual window opening switch 3 is kept turned on for a period of time e exceeding the period of time *b* for the preparatory down movement of the window glass 1a and the momentary pause period of time T2 even after the preparatory down movement of the window glass 1a. In this event, the reversible motor 16 resumes rotation in the normal direction in response to expiration of the momentary pause period of time T2 to further move down the window glass 1a so as thereby to open door window 1 as usual following the preparatory down movement until the manual window opening switch 3 is turned off as shown by a symbol â in Figure 5.

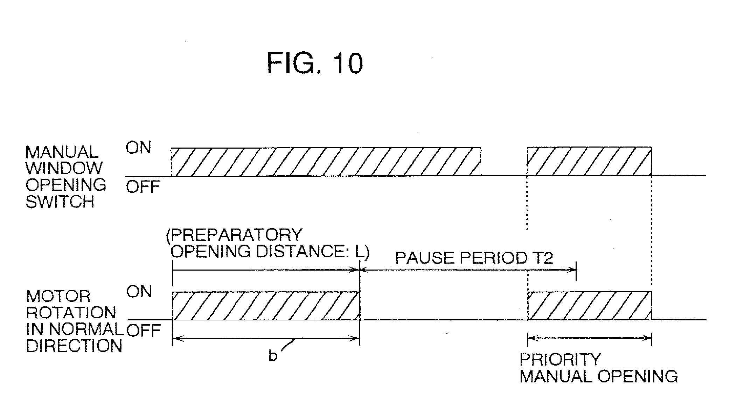

Figure 10 shows an event where the manual window opening switch 3 is turned off after the preparatory down movement of the window glass 1a but before expiration of the momentary pause period of time T2 and either one of the window opening/closing switches 2-5 is turned on or the automatic reverse of movement of the window glass 1a due to a jam of the window glass 1a is executed during progress of the momentary pause period of time T2. In this event, the momentary pause period of time T2 is discontinued immediately when the one of the window opening/closing switches 2-5 is turned on or when the automatic reverse of movement of the window glass 1a is executed and then window glass 1a is move in the form of movement demanded by the window switch that is turned on or by the automatic reverse function. That is, in such an event, the movement of the window glass 1a demanded by the window switch that is turned on or the automatic reverse function takes preference over the momentary pause of down movement of the window glass 1a.

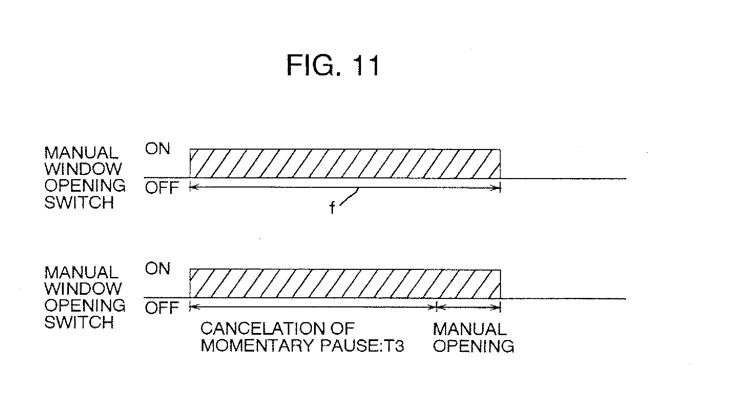

Figure 11 shows an event where the manual window opening switch 3 is turned on and continuously kept on still after completion of the preparatory down movement of the window glass 1a for a period of time beyond the pause inhibition period of time T3. In this event, the reversible motor 16 is continuously kept alive from a point of time of a turn on operation of the manual window opening switch 3 to a point of time of a turn off operation of the manual window opening switch 3, so that the window glass 1a moves down as usual continuously to the preparatory down movement as shown by a symbol á in Figure 5 until the manual window opening switch 3 is turned off.

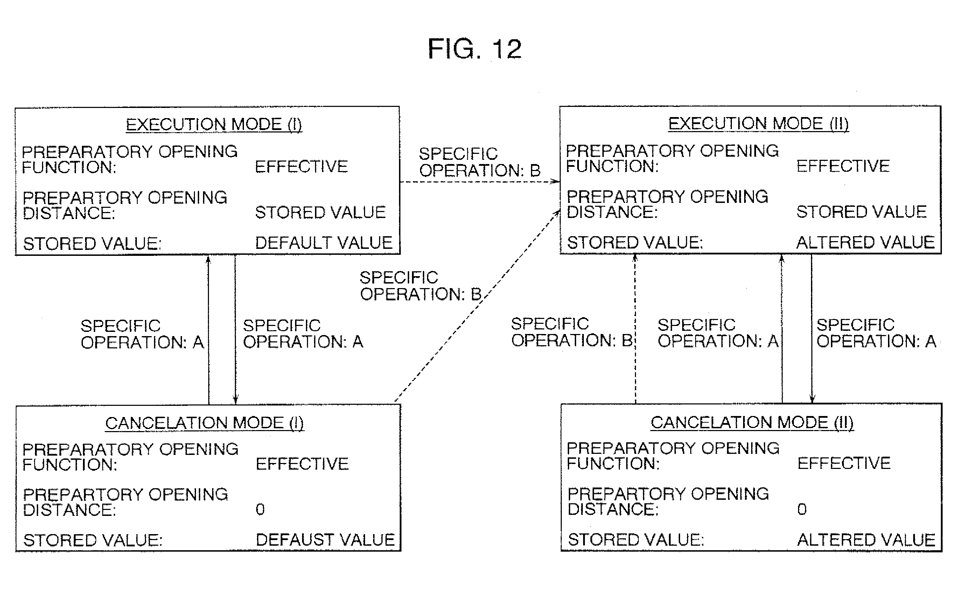

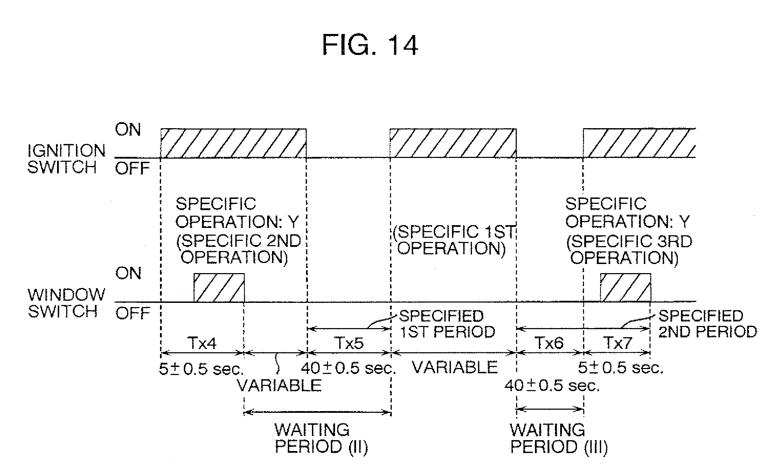

Figure 12 is a block diagram illustrating functional mode transition for the preparatory window opening function that the window opening/closing control system 100A performs. The preparatory window opening function can be changed in mode among execution modes (I) and (II) in which the momentary pause period of time T2 or a completely stop is effectively taken following the preparatory down movement of the window glass 1a and cancellation modes (I) and (II) in which the preparatory window opening function including the momentary pause period of time T2 or a complete stop is cancelled. Specifically, in the execution mode (I), the preparatory window opening function is executed with a specified preparatory opening distance L that is set to, for example, 30 mm and memorised as a default value when the vehicle 100 is shipped from the manufacturer. In the execution mode (II), the preparatory window opening function is executed with a specified preparatory opening distance L that can be changed and updated between, for example, 20 and 100 mm through a specific operation Y (which will be described in detail later with reference to Figure 14). In the cancellation mode (I), the preparatory window opening function is made ineffective or cancelled by establishing a specified preparatory opening distance L of zero (0) although the specified preparatory distance is memorised as a default value (30 mm). In the cancellation mode (II), the preparatory window opening function is made ineffective or cancelled by establishing a specified preparatory opening distance L of zero (0) although the specified preparatory opening distance L change and update by the specific operation Y (which is between 20 and 100 mm) is memorised.

As shown by solid line in Figure 12, a specific operation A (which will be described later) causes a mode change of preparatory window opening function from the execution mode (I) or (II) to the cancellation mode (I) or (II) and vice versa. Further, as shown by chained line in Figure 12, the specific operation B causes a mode change of preparatory window opening function from the execution mode (I) or (II), or the cancellation mode (II) to the cancellation mode (I).

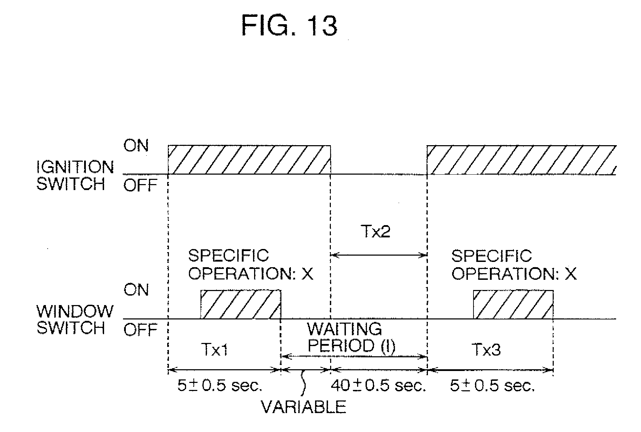

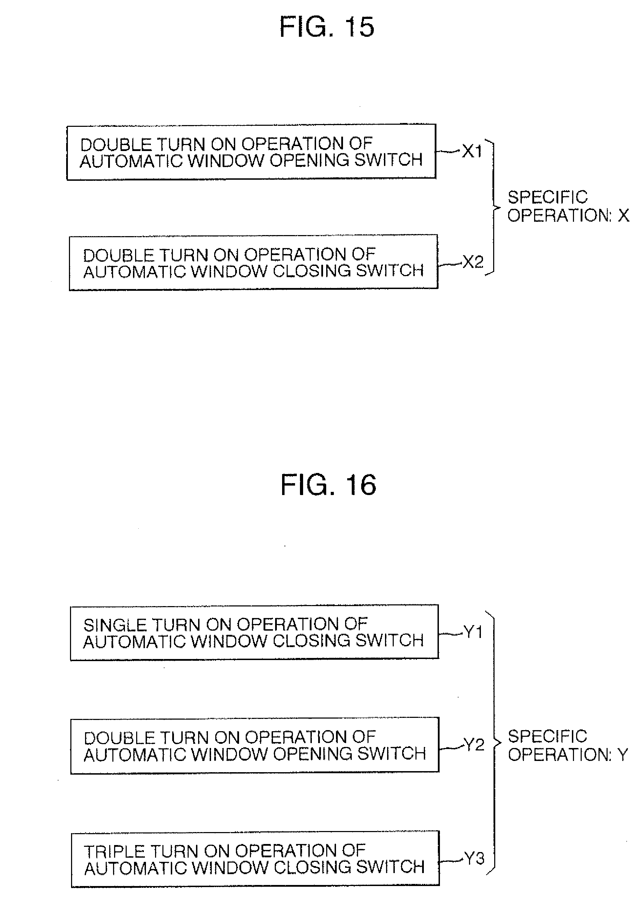

Figure 13 shows a time chart of the specific operation A for a mode change of preparatory window opening function from the execution mode (I) or (II) to the cancellation mode (I) or (II) and vice versa. As shown, the specific operation A (which is referred as a specific fourth operation) is completed by making a specific operation X (which will be described in detail with reference with Figure 15) twice, namely a first specific operation X before expiration of a specified period of time Tx1, for example 5±0.5 seconds, from a first turn on operation of the ignition switch 10 and

a second specific operation X before expiration of a specified period of time Tx3, for example, 5±0.5 seconds, from a second turn on operation of the ignition switch 10 made before expiration of a specified period of time Tx2, for example 40±2 seconds, from a first turn-off operation of the ignition switch 10. As shown in Figure 15, the specific operation X comprises a double turn on operation of the automatically window opening switch 5 (X1) and a double turn on operation of the automatically window closing switch 4 (X2) consecutively in this order.

An interval between completion of the first specific operation X and commencement of the second turn on operation of the ignition switch 10 is appropriated for a first waiting period of time I (which is a total of a variable interval between the completion of the specific operation X and the turn off operation of the ignition switch 10 and the specified period of time Tx2) in which the preparatory window opening function is made effective and which is not cancelled due to any other operation.

Figure 14 shows a time chart of the specific operation B for a mode change function changing a mode from the execution mode (I) or (II), or the cancellation mode (II) to the cancellation mode (I). The preparatory distance alteration operation B is completed by making the following sequential switch operation (I) to (V), in other words, for alteration of the specified preparatory opening distance L to a desired value from the default value or zero (0). As shown, the specific operation B is completed by the following sequential operations (i) to (v):
(i) Making a specific operation Y (which is referred to as a specific second operation including a turn on operation of the ignition switch 19), which will be described later with reference to Figure 16, before expiration of a specified period of time Tx4, for example 5±0.5 seconds, from a first turn on operation of the ignition switch 10.
(ii) Subsequently, turning on the ignition switch 10 again before expiration of a specified first period of time Tx5, for example 40±2 seconds, from the first turn-off operation of the ignition switch 10.
(iii) Making a specific first operation (operation of one of the window opening/closing switches 3 to 6) to move up or down the window glass 1a to a desired position, that is desired as an open position from the upper extreme position for the preparatory down movement of the window glass, after a second turn on operation of the ignition switch 10 and subsequently turning off the ignition switch 10. In response to the second turn off operation of the ignition switch 10, a distance of the desired position from the upper extreme position is set as the specified preparatory opening distance L. The period of time between the second turn on and off operation of the ignition switch 10, which is variable, is appropriated for a preparatory distance alteration period in which the specified preparatory opening distance L is unconditionally alterable but the preparatory window opening function is made ineffective.
(iv) Making a third turn on operation of the ignition switch 10 before expiration of a specified period of time Tx6, for example 40±2 seconds, from the second turn off operation of the third turn on operation of the ignition switch 10.
(v) Making another specific operation Y (which is referred to as a specific third operation), the same as the specific second operation, before expiration of a specified period of time Tx7, for example 5±0.5 seconds, from the third turn on operation of the ignition switch 10.

In this instance, the operation of one of the window opening/closing switches 3 to 6 following the first turn on operation of the ignition switch 10 during progress of the preparatory distance alteration period is referred to as specific first operation. The specific operation Y during progress of the specified periods of time Tx4 and Tx7 are referred to as specific second and third operations, respectively. The specified period of time from the end of the preparatory distance alteration period to the end of the specified period of time Tx7 for the specific third operation Y is referred to as specified second period of time (Tx6 + Tx7). The period of time from completion of the specific second operation Y to the second turn on operation of the ignition switch 10 is appropriated for a second waiting period of time II (which is a total of a variable interval between the completion of the specific operation Y and the turn off operation of the ignition switch 10 and the specified first period of time Tx5) which is variable, and the specified period of time Tx6 from the second turn off operation of the ignition switch 10 to the third turn on operation of the ignition switch 10 is appropriated for a third waiting period of time III (which is the specified period of time Tx6).

As shown in Figure 16, the specific operation Y comprises a single turn on operation of the automatic window closing switch 4 (Y1), a double turn on operation of the automatic window opening switch 5 (Y2) and a triple turn on operation of the automatic window closing switch 4 (Y3) made consecutively in this order.

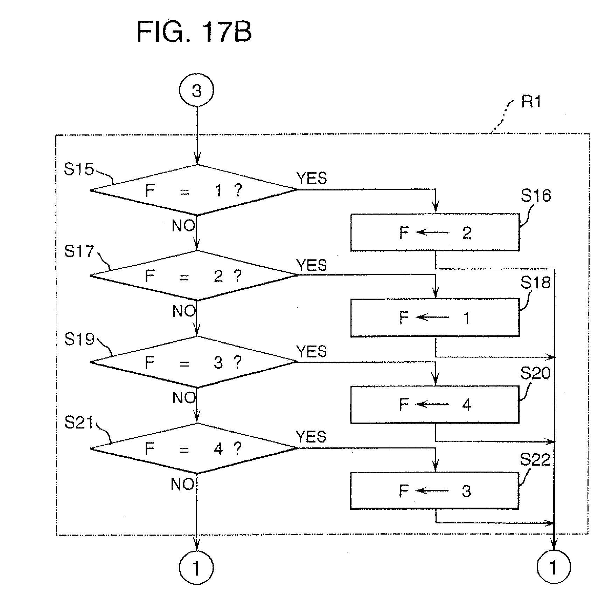

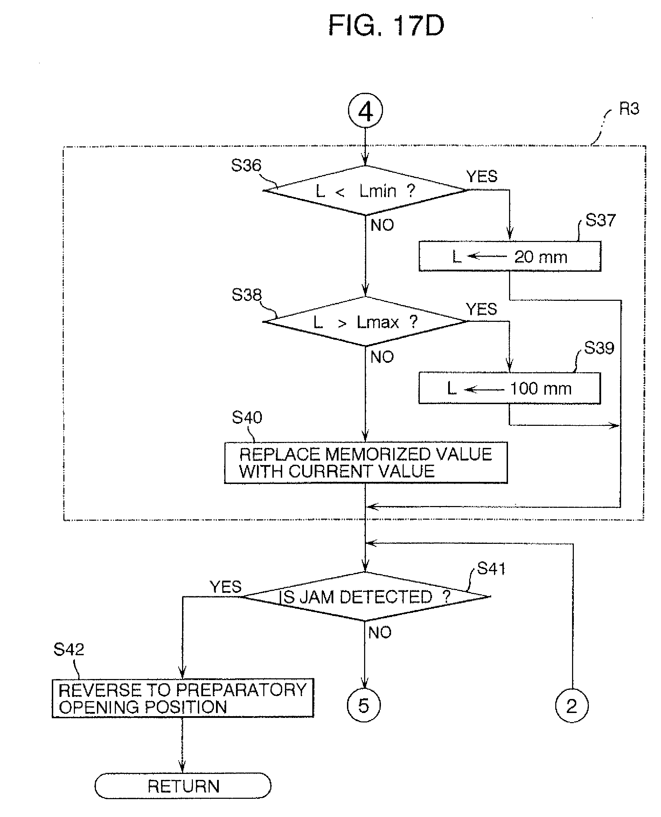

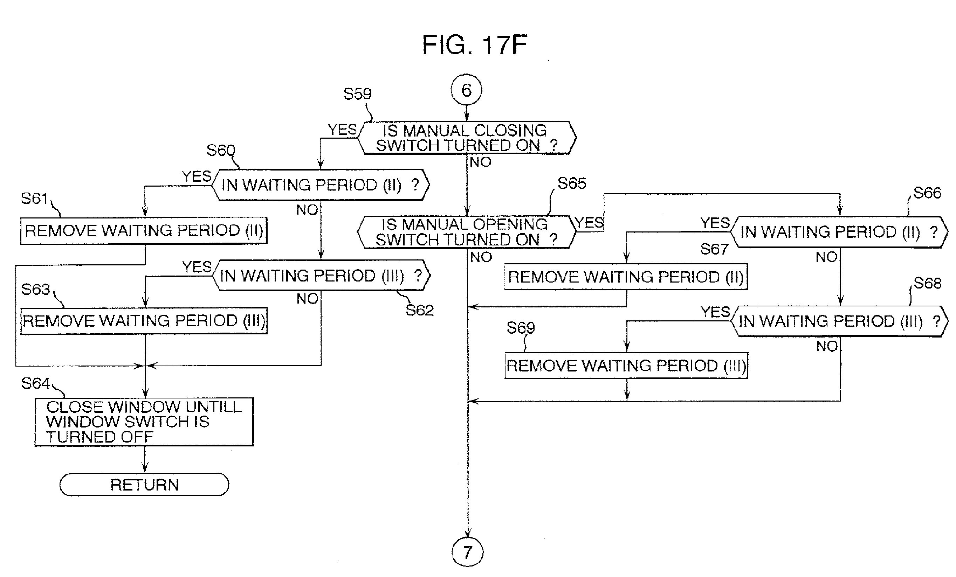

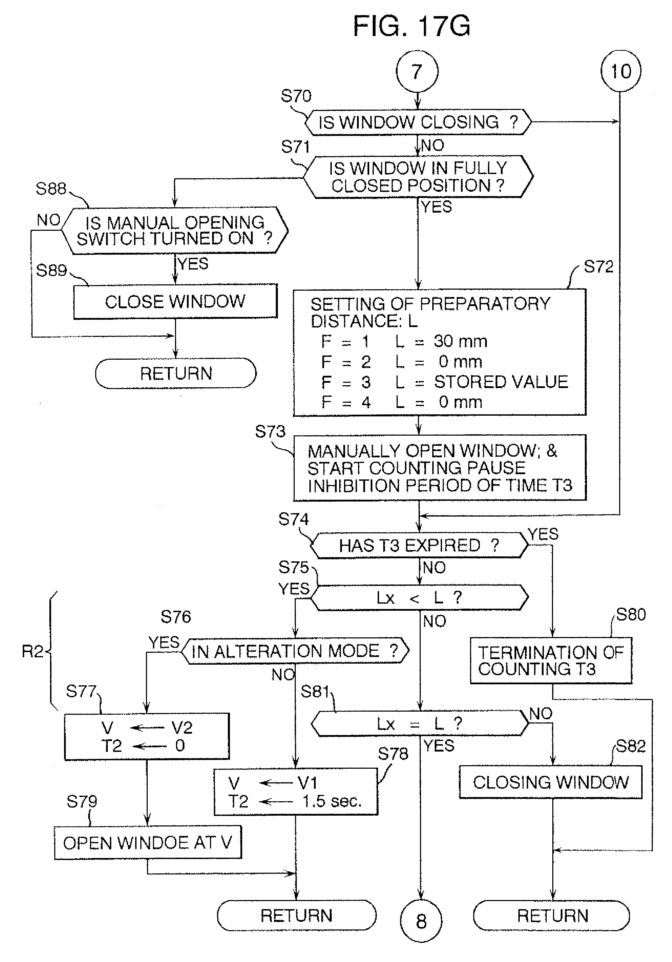

The CPU 12 as control means performs various functions of altering the specified preparatory opening distance L (a process at step 41 in a window opening/closing control sequence routine shown in Figure 17D) according to the specific first operation (see Figure 14), controlling the momentary pause or the complete halt of the preparatory down movement of the window glass 1a by altering the momentary pause period of time T2 to a time less than 1.5 seconds (the window glass 1a moves down continuously from the preparatory down movement by setting the specified preparatory opening distance L to zero in this embodiment; a process R2 at step S76 and S77 in the window opening/closing control sequence routine shown in Figure 17G), cancelling the momentary pause in response to the fourth specific operation A after the preparatory down movement of the window glass 1a, changing a mode of preparatory window opening among the execution modes (I) and (II) and the cancellation modes (I) and (II) (a process R1 at steps S15 through S22 in the window opening/closing control sequence routine shown in Figure 17B), and restrictively replacing the specified preparatory opening distance L changed through the specific first operation with a predetermined lower limit opening distance Lmin (20 mm) when the specified preparatory opening distance L is shorter than the predetermined lower limit opening distance Lmin or with a predetermined upper limit opening distance Lmax (100 mm) when the specified preparatory opening distance L is longer than the predetermined upper limit opening distance Lmax (a process R3 at steps S36 through S39 in the window opening/closing control sequence routine shown in Figure 17D).

The function of altering the specified preparatory opening distance L is such that alteration of the specified preparatory opening distance L can be permitted when the specific first operation is commenced before expiration of the specified first period of time Tx5 after implementation of the specific second operation Y and is, however, prevented when the specific first operation is commenced after expiration of the specified first period of time Tx5 after implementation of the specific second operation Y2. In addition, the function of altering the specified preparatory opening distance L is such that alteration of the specified preparatory opening distance L can be permitted when the specific third operation Y is commenced before expiration of the specified second period of time (T6 + T7) after implementation of the specific first operation and is, however, prevented when the specific third operation Y is not completed before expiration of the specified second period of time (T6 + T7) after implementation of the specific first operation. That is, the specified preparatory opening distance L can be altered only when the specific first operation is commenced before expiration of the specified first period of time Tx5 after implementation of the specific second operation Y and the specific third operation Y is commenced before expiration of the specified second period of time (T6 + T7) after implementation of the specific first operation. As apparent from the above description, in this embodiment, the specific first, second and third operations are effected by the window switches 2 to 5 and 10 and the fourth specific operation A is effected by the window switches 4 and 5.

In addition, the CPU 12 increases a speed V to a speed V2, that is a speed at which the window glass 1a is moved up or down according to an operation of one of the window opening/closing switches 2-5, higher during the specific first operation for alteration of the specified preparatory opening distance L made in the alteration period of time than in the absence of the specific first operation.

The RAM 23 readably memorises data on the predetermined lower limit opening distance Lmin, for example 20 mm, (which is referred to as lower guard value) and the predetermined upper limit opening distance Lmax, for example 100 mm (which is referred to as upper guard value) in specified memory areas, respectively.

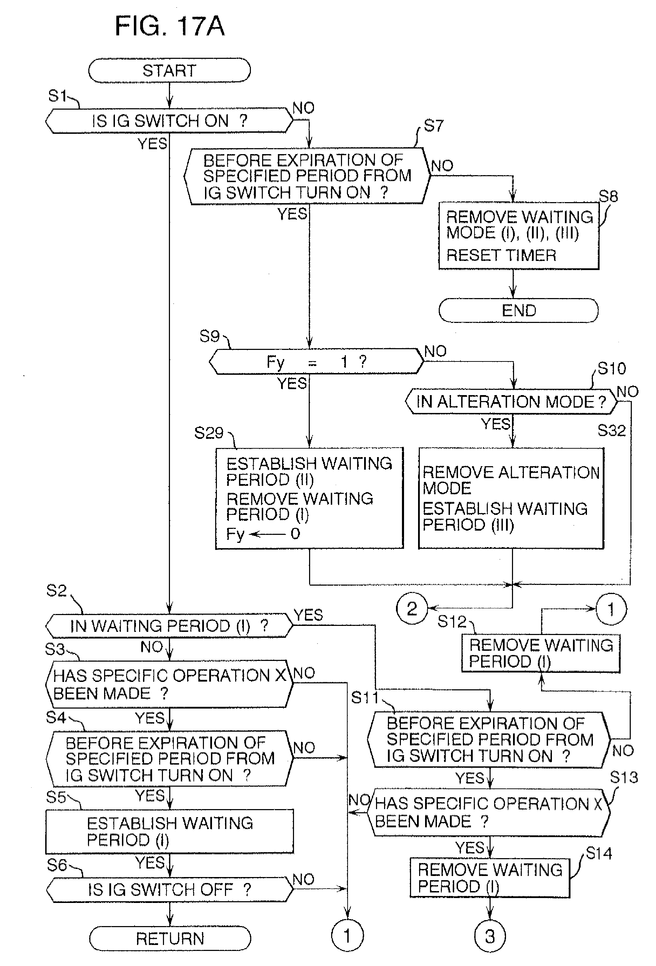

Figures 17A to 17I are respective parts of a flow chart illustrating a sequence routine of window opening/closing control for the window opening/closing control system 100A constructed as described above.

Figures 17A and 17B show a part of the window opening/closing control sequence routing for, in particular, mode transition control in connection with the specific fourth operation A shown by the time chart in Figure 13. As shown, when the sequence logic commences, control proceeds directly to a decision block at step S1 where a decision is made as to whether the ignition switch 10 has been turned on. As sown in Figure 13, since the mode transition is implemented only when the ignition switch 10 has been turned on, the answer is affirmative, then, a decision is made at step S2 as to whether it is the first waiting period of time I. Since, immediately after the turn on operation of the ignition switch 10, the first waiting period of time I is not yet been reached, then, a decision is subsequently made at step S3 as to whether the specific operation X has been made. In the event where the specific operation X has been done, a decision is further made at step S4 as to whether the specific operation X was done before expiration of the specified period of time Tx1 after the turn on of the ignition switch 10. When the answer is affirmative, the first waiting period of time I is established at step S5.

Subsequently, a decision is made at step S6 as to whether the ignition switch 10 has been turned off. In the event where the ignition switch 10 has been turned off, the sequence logic returns for another decision at step S1. Since, at this point of time, the ignition switch 10 has been turned off, then, a decision is made at step S7 as to whether it is still within the specified period of time Tx2. When the answer is negative, then, after resetting the waiting period of time state I, II or III at step S8, the sequence logic goes to end. On the other hand, when the answer to the decision made at step S7 is affirmative, a decision is made at step S9 as to whether a state flag Fy is up or has been set to "1." Since the state flag Fy is down or has been reset to "0" till then, that is, the answer to the decision is negative, then, a decision is subsequently made at step S10 as to whether it is in the mode for the preparatory distance alteration. Since, it is not in the mode for the preparatory distance alteration till then, the sequence logic proceeds to a decision block at step S41 (Figure 17D). When nothing is subsequently done (non of the window opening/closing switches is subsequently operated), the sequence logic returns for another decision at step S1 substantially skipping the part of the sequence routine following step S41.

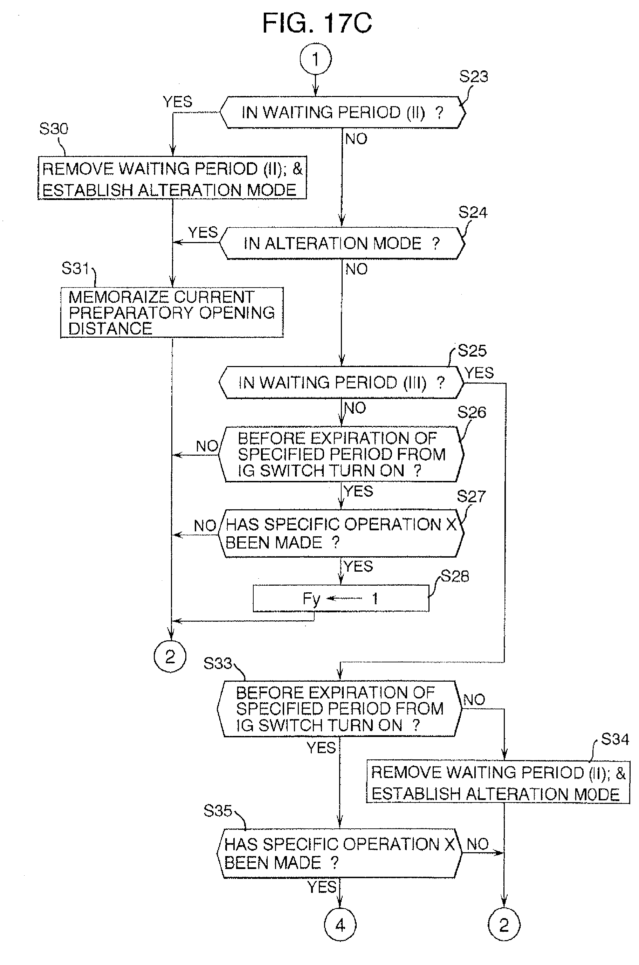

When a second turn on operation of the ignition switch 10 has been made as shown in the time chart in Figure 13, the answer to the decision made at step S1 is affirmative, then, the decision regarding the first waiting period of time I is made at step S2. Since the first waiting period of time I has been established at step S5 in the previous routine, the answer is affirmative, then, a decision is made at step S11 as to whether the specified period of time Tx3 has been reached after the second turn on of the ignition switch 10. When the answer is negative, after removing the first waiting period of time I at step S12, the sequence logic proceeds to a decision block at step S23 (Figure 17C).

On the other hand, when the answer to the decision made at step S11 is affirmative, then, a decision is further made at step S13 as to whether the second specific operation X2 has been made. When the answer is affirmative, then, after removing the first waiting period of time I at step S14, a decision is made at step S15 as to whether a mode flag F has been set to "1" that indicates the execution mode of preparatory window opening with a default value. When the answer is affirmative, then after setting the mode flag F to "2" that indicates the first cancellation mode I at step S16, the sequence logic proceeds to the decision block at step S23 (Figure 17C). When the answer is negative, a decision is further made at step S17 as to whether the mode flag F has been set to "2." When the answer is affirmative, then after setting the mode flag F to "1" at step S18, the sequence logic proceeds to the decision block at step S23. On the other hand, when the answer is negative, a decision is further made at step S19 as to whether the mode flag F has been set to "3" that indicates an execution mode of preparatory window opening with an updated specified preparatory opening distance L. When the answer is affirmative, then after setting the mode flag F to "4" that indicates the second cancellation mode II at step S20, the sequence logic proceeds to the decision block at step S23. On the other hand, when the answer is negative, a decision is further made at step S21 as to whether the mode flag F has been set to "4." When the answer is affirmative, then after setting the mode flag F to "3" at step S22, the sequence logic proceeds to the decision block at step S23. When nothing is subsequently done (non of the window opening/closing switches is subsequently operated), the sequence logic returns for another decision at step S1 substantially skipping the part of the sequence routine following step S23.

Figures 17C and 17D show a major part of the window opening/closing control sequence routing for preparatory distance alteration in connection with the operation B as shown by the time chart in Figure 14. When the sequence logic commences and control proceeds to the function block at step S1 to make the decision as to whether the ignition switch 10 has been turned on (see Figure 17A). It will be recalled that, in the case of making the parameter alteration operation B, the ignition switch 10 is always previously turned on. Accordingly, decisions as to the first waiting period of time I and the specific operation X are subsequently made at steps S2 and S3, respectively. Since the first waiting period of time I has not yet been established till then, and the specific operation X is not made, the sequence logic proceeds a decision at step S23 shown in Figure 17C.

At step S23, a decision is made as to whether the second waiting period of time II has been established. Since the second waiting period of time II has not established till then, a decision is further made at step S24 as to whether it is in the mode for alteration of the specified preparatory opening distance L. At this time, since it is still out of the mode for alteration of the specified preparatory opening distance L, a decision is further made at step S25 as to whether the third waiting period of time III has been established. Since the third waiting period of time III has not yet been established till then, a decision is further made at step S26 as to whether it is still before expiration of the specified period of time Tx4 after the first turn on operation of the ignition switch 10. When the answer is negative, this indicates that the specified period of time Tx4 has been over, then, the sequence logic proceeds to a decision block at step S41 (Figure 17D). On the other hand, when the answer is affirmative, this indicates that it is still before expiration of the specified period of time Tx4, then, a decision is further made at step S27 as to whether the specific operation Y, in particular the second specific operation Y, for alteration of the specified preparatory opening distance L has been made. When the answer is negative, the sequence logic proceeds to a decision block at step S41. On the other hand, when the answer is affirmative, i.e. the second specific operation Y has been done before expiration of the specified period of time Tx4, after setting the state flag Fy to "1" at step S28, the sequence logic proceeds to a decision block at step S41. When nothing is subsequently done (non of the window opening/closing switches is subsequently operated), the sequence logic returns for another decision at step S1 substantially skipping the part of the sequence routine following step S23.

When the ignition switch 10 is turned off after the first turn on operation thereof, the answer to the decision made at step S1 turns negative, then, the sequence logic proceeds to a decision at step S7 (Figure 17A) as to whether it is still before expiration of the specified first period of time Tx5. When the answer to the decision is affirmative, a decision is further made at step S9 as to whether the state flag Fy is up or has been set to "1." Since the state flag Fy is up or has been set to "1" till then, that is, the answer to the decision is affirmative, then, after establishing the second waiting period of time II in place of the first waiting period of time I and resetting the state flag Fy to "0" at step S29, the sequence logic proceeds to a decision block at step S41. When nothing is subsequently done (non of the window opening/closing switches is subsequently operated), the sequence logic returns for another decision at step S1 substantially skipping the part of the sequence routine following step S41.

When the ignition switch 10 is turned on for the second time following the first turn off operation, the answer to the decision made at step S1 turns affirmative, then, after negative answers to the decisions made at steps S2 and S3, a decision as to the second waiting period of time II is made at step S23. Since the second waiting period of time II has been established till then, the answer turns affirmative, then, while the second waiting period of time II is removed, the mode is put for alteration of the specified preparatory opening distance L at step S30. Subsequently, after memorising a current specified preparatory opening distance L as an updated preparatory opening distance L in RAM 23, the sequence logic proceeds to a decision block at step S41. When nothing is subsequently done (non of the window opening/closing switches is subsequently operated), the sequence logic returns for another decision at step S1 substantially skipping the part of the sequence routine following step S41.

While the ignition switch 10 remains on during the preparatory distance alteration mode, the answer to the decision made at step S1 is always affirmative, then, following negative answers to the decisions made at steps S2, S3 and S23, a decision as to the mode for alteration of the specified preparatory opening distance L is made at step S24. Since it is still in the mode for alteration of the specified preparatory opening distance L, the answer is affirmative, after replacing the specified preparatory opening distance L with a current specified preparatory opening distance L for updating at step S31, the sequence logic proceeds to a decision block at step S41.

When the ignition switch 10 is turned off for the second time following the second turn on operation, the answer to the decision made at step S1 turns negative, a decision as to the specified period of time Tx3 is made at step S7. When the answer is affirmative, a decision as to the state flag Fy is made at step S9. Since the state flag Fy has been reset to "0" till then, a decision as to the mode for alteration of the specified preparatory opening distance L is made at step S10. Since, at this time, it is in the mode for alteration of the specified preparatory opening distance L, after disabling alteration of the specified preparatory opening distance L and establishing the third waiting period of time III at step S32, the sequence logic proceeds to a decision block at step S41. When nothing is subsequently done (non of the window opening/closing switches is subsequently operated), the sequence logic returns for another decision at step S1 substantially skipping the part of the sequence routine following step S41.

When the ignition switch 10 is tuned on for the third time, the answer to the decision made at step S1 turns affirmative, then, the sequence logic proceeds to a decision block at step S25 following negative answers to the decisions made at steps S2, S3, S23 and S24.

The decision made at step S25 is as to whether the third waiting period of time III has been established. In this instance, since the third waiting period of time III has been established through the previous steps S1, S7, S9, S10 and S32 following steps 24 and S31, the answer to the decision made at step S25 is affirmative, then, a decision is further made at step S33 as to whether it is before expiration of the specified second period of time Tx7 from the third turn on operation of the ignition switch 10. When the answer is negative, this indicates that the specified second period of time Tx7 has been over, then, after removing the third waiting period of time III at step S34, the sequence logic proceeds to a decision block at step S41. On the other hand, when the answer is affirmative, a decision is further made at step S35 as to whether the second specific operation Y has been made. When the answer is negative, the sequence logic proceeds directly to a decision block at step S41.

On the other hand, when the answer is affirmative, decisions as to guard values for the specified preparatory opening distance L are made. Specifically, a decision is made at step S36 as to whether the updated specified preparatory opening distance L is shorter than the predetermined lower limit opening distance Lmin, for example 20 mm, that has been set as a lower guard value. When the answer is affirmative, i.e. when the updated specified preparatory opening distance L is shorter than the predetermined lower limit preparatory opening distance Lmin, then, the predetermined lower limit preparatory opening distance Lmin is memorised in RAM 23 at step S37. On the other hand, when the answer is negative, i.e. when the updated specified preparatory opening distance L is longer than the predetermined upper limit preparatory opening distance Lmax, for example 100 mm, that has been set as an upper guard value, then, a decision is further made at step S38 as to whether the updated specified preparatory opening distance L is longer than the predetermined upper limit opening distance Lmax. When the answer is affirmative, i.e. when the updated specified preparatory opening distance L is larger than the predetermined upper limit preparatory opening distance Lmax, the predetermined upper limit preparatory opening distance Lmax is memorised in RAM 23 at step S39. When the updated specified preparatory opening distance L is between the predetermined lower and higher limit preparatory opening distances Lmin and Lmax, a current preparatory opening distance L is memorised as an updated specified preparatory opening distance L at step S40. By way of these steps S23 through S40 shown in Figures 17C and 17D, the preparatory opening distance alteration through the specific operation B is achieved. Thereafter, the sequence logic proceeds to the preparatory window opening control.

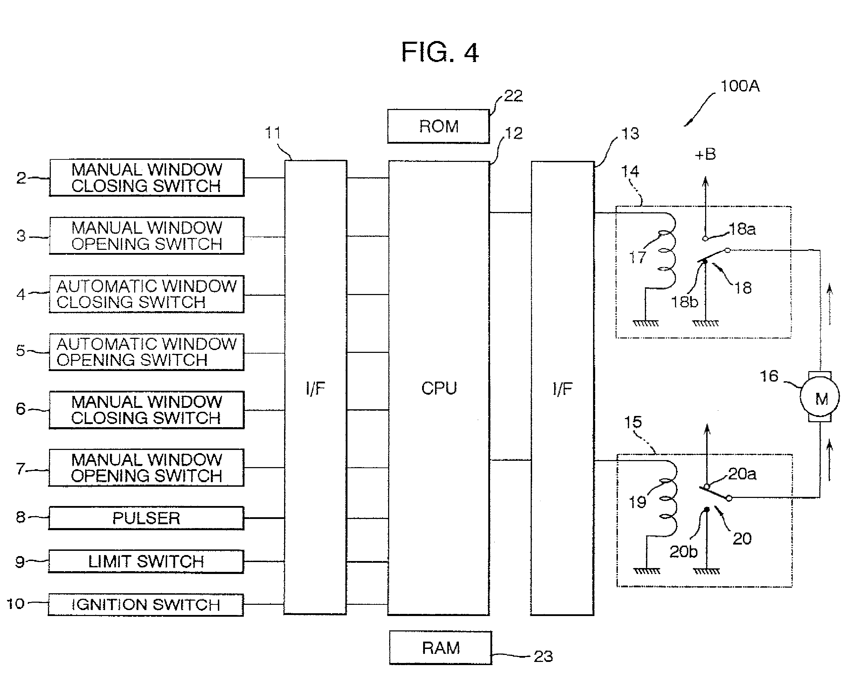

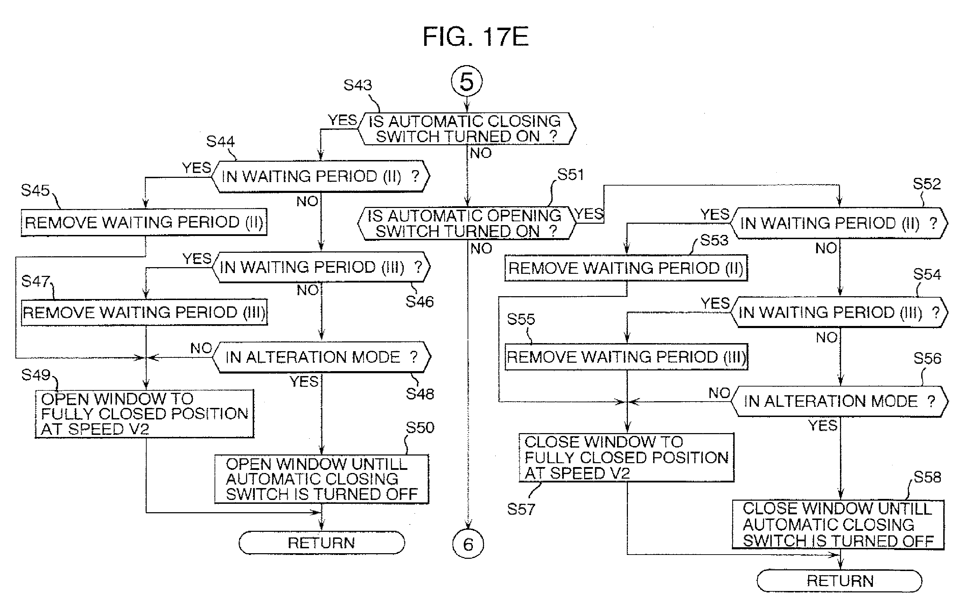

Figure 17E to 17I show a major part of the preparatory window opening control. At step s41, a decision is made as to whether there is an occurrence of a jam of the window glass 1a. When there is no change in opening of the window 1, i.e. no up or down movement of the window glass 1a, in spite of an operation of any window opening/closing switches 2-5, an occurrence of a jam of the window glass 1a is detected on the basis of an output signal from the pulser 8 or counter torque exerted on the reversible motor 16. When the answer to the decision made at step S41 is affirmative, the reversible motor 16 is reversed to move down the window glass 1a a specified position or opening as shown in Figure 4. Subsequently, the sequence logic returns for another decision at step S1.

On the other hand, when the answer to the decision made at step S41 is negative, a decision is further made at step S43 as to whether the automatic window opening switch 5 has been operated. When the answer is affirmative, a decision is subsequently made at step S44 as to whether it is in the second waiting period of time II. When the answer is affirmative, after removing the second waiting period of time II at step S45, the window glass 1a is moved down to the fully open position at the speed V2 that is higher than a specified ordinary speed V1 (a speed at which the window glass is moved up/down for ordinary window opening/closing operation) at step S49. On the other hand, the answer is negative, a decision is further made at step S46 as to whether it is in the third waiting period of time III. When the answer is affirmative, after removing the third waiting period of time III at step S47, the window glass 1a is moved down to the fully open position at the speed V2 at step S49. On the other hand, when the answer to the decision made at step S46 is negative, a further decision is made at step S48 as to whether it is in the mode for alteration of the specified preparatory opening distance L. When the answer is negative, the window glass 1a is moved down to the fully open position at the speed V2 at step S49. On the other hand, the answer is affirmative, this indicates that it is in the mode for alteration of the specified preparatory opening distance L, then, the window glass 1a is moved down until the automatic window opening switch 5 is released at step S50. This prevents accidental down movement of the window glass 1a to the fully open position due to an erroneous operation of the automatic window opening switch 5 within the mode for alteration of the specified preparatory opening distance L. At this time, the window glass 1a moves at the speed V2 until the automatic window opening switch 5 is released. The speed V2 that is higher than the specified ordinary speed V1 is established in order to fulfil both demand for opening/closing the door window 1 more quickly during an automatic window opening/closing operation than during a manual window opening/closing operation and demand for opening/closing the door window 1 at a high speed in the mode for alteration of the specified preparatory opening distance L.

On the other hand, when the answer to the decision made at step S43, a decision is further made at step S51 as to whether the automatic window closing switch 4 has been operated. When the answer is affirmative, a decision is further made at step S52 as to whether it is before expiration of the second waiting period of time II. When the answer is affirmative, after removing the second waiting period of time II at step S53, the window glass 1a is moved up to the fully closed position at the speed V2 at step S47. On the other hand, the answer is negative, a decision is further made at step S54 as to whether it is in the third waiting period of time III. When the answer is affirmative, after removing the third waiting period of time III at step S55, the window glass 1a is moved up to the fully closed position at the speed V2 at step S57. On the other hand, when the answer to the decision made at step S54 is negative, a further decision is made at step S56 as to whether it is in the mode for alteration of the specified preparatory opening distance L. When the answer is negative, the window glass 1a is moved up to the fully closed position at the speed V2 at step S57. On the other hand, the answer is affirmative, this indicates that it is in the mode for alteration of the preparatory distance L, then, the window glass 1a, is moved up until the automatic window closing switch 4 is released at step S58. That is, this prevents accidental up movement of the window glass 1a to the fully closed position due to an erroneous operation of the automatic window closing switch 4. At this time, the window glass 1a moves at the speed V2 until the automatic window closing switch 4 is released. The speed V2 that is higher than the specified ordinary speed V1 is established in order to fulfil both demand for opening/closing the door window 1 more quickly during an automatic window opening/closing operation than during a manual window opening/closing operation and demand for opening/closing the door window 1 at a high speed in the mode for alteration of the specified preparatory opening distance L. When the window glass 1a attains the fully closed position at step S57 or when the automatic window closing switch 4 is released at step S58, the sequence logic returns for another decision at step S1.

On the other hand, when the answer to the decision made at step S51 is negative, a decision is subsequently made at step S59 as to whether the manual window closing switch 2 has been operated. When the answer is affirmative, a decision is subsequently made at step S60 as to whether it is in the second waiting period of time II. When the answer is affirmative, after removing the second waiting period of time II at step S61, the window glass 1a is moved up at the speed V1 or V2 until the manual window closing switch 2 is released at step S64. The specified ordinary speed V1 is employed for an ordinary door opening/closing operation, and the speed V2 is employed for alteration of the specified preparatory opening distance L. On the other hand, the answer is negative, a decision is further made at step S62 as to whether it is in the third waiting period of time III. When the answer is affirmative, after removing the third waiting period of time III at step S63, the window glass 1a is moved up to the fully closed position at the speed V1 or V2 at step S64. On the other hand, when the answer to the decision made at step S62 is negative, the window glass 1a is immediately moved up to the fully closed position. When the window glass 1a attains the fully closed position, in other words, when the door window 1 is fully closed, the sequence logic returns for another decision at step S1.

On the other hand, when the answer to the decision made at step S59 is negative, this indicates that there is no operation of the manual window closing switch 2, then, a decision is further made at step S65 as to whether the manual window opening switch 3 has been operated. When the answer is negative, then, the sequence logic proceeds immediately to a decision block at step S70 (Figure 17G). However, when the answer is affirmative, a decision is subsequently made at step S66 as to whether it is in the second waiting period of time II. When the answer is affirmative, the second waiting period of time II is removed at step S67. On the other hand, the answer is negative, a decision is further made at step S68as to whether it is in the third waiting period of time III. When the answer is affirmative, the third waiting period of time III is removed at step S69. When the answer to the decision made at step 68 is negative, or after removing the third waiting period of time III at step S69, the sequence logic proceeds to a decision block at step S70.

As apparent, priority is given to the automatic reversing operation, the automatic opening operation, the automatic closing operation, the manual closing operation and the manual opening operation through these steps 41 to 69.

As shown in Figure 17G, a decision is made at step S70 as to whether the window glass 1a is moving down. Since, at the beginning, the window glass 1a does not move down, the answer is negative. Subsequently, a decision is further made at step S71 as to whether the window glass 1a remains in the fully closed position. This decision is made on the basis of a presence or an absence of an output signal from the limit switch 9. The limit switch 9 may be adapted to provide an output signal when detecting the window glass 1a in a position close to the fully closed position. When the answer to the decision is affirmative, this indicates that the window glass 1a is in the fully closed position or is almost in the closed position, then, the specified preparatory opening distance L is set according to the state of the mode flag F at step S72. Specifically, the specified preparatory opening distance L is set to 30 mm for the mode flag F of "1," to 0 for the mode flag of "2" to the updated preparatory opening distance L for the mode flag of "3," or to 0 for the mode flag F of "4."

Subsequently, while manual opening of the window 1 commences, an internal timer of the CPU 12 is actuated to count time for the pause inhibition period of time T3 at step S73. At step S74, a decision is made as to whether the pause inhibition period of time T3 has expired. At the beginning of counting the pause inhibition period of time T3, the answer is negative, then, a further decision is made at step S75 as to whether a present distance of down movement Lx of the window glass 1a is smaller than the specified preparatory opening distance L. Since, at the beginning of down movement, the window glass 1a does not move the preparatory opening distance L, the answer is affirmative, then, a decision is further made at step S76 as to whether it is in the mode for alteration of the specified preparatory opening distance L. When the answer is affirmative, while the speed of movement V is set to the speed V2, the momentary pause period of time T2 is set to almost 0 (zero) at step S77. In this instance, although the momentary pause period of time T2 is set to 0 (zero) for the purpose of disabling the preparatory window opening function in the mode for alteration of the specified preparatory opening distance L, it may be set to less than 1.5 seconds. On the other hand, when the answer is negative, while the speed of down movement V is set to the ordinary speed V1, the momentary pause period of time T2 is set to 1. 5 seconds at step S78. Subsequently, after moving down the window glass 1a at the speed V1 or V2 at step S79, the sequence logic returns for another decision at step S1.

When moving down the window glass 1a as described above, the answer to the decision regarding down movement made at step S70 turns affirmative, then, a decision is subsequently made at step S74 as to whether the pause inhibition period of time T3 has expired.

When the answer to the decision as to a present distance of down movement Lx of the window glass 1a made at step S75 turns negative, then, a decision is made at step S81 as to whether the window glass 1a has moved the specified preparatory opening distance L. When the answer is negative, after continuing down movement of the window glass 1a at step S82, the sequence logic returns for another decision at step S1. On the other hand, when the answer is affirmative, this indicates that the window glass 1a has moved the specified preparatory opening distance L, then, after terminating counting the pause inhibition period of time T3 at step S83, a decision is made at step S84 as to whether the momentary pause period of time T2 is still being counted. Since the momentary pause period of time T2 is not counted at the beginning, the answer is negative, then, after actuating the internal timer to start counting the momentary pause period of time T2 at step S85 and holding the opening distance of down movement of the window glass 1a at step S86, a decision is further made at step S87 as to whether the momentary pause period of time T2 has expired. On the other hand, when the answer to the decision as to the momentary pause period of time T2 made at step S84 turns affirmative, the opening distance of the window glass 1a is held at step S86 without actuating the internal timer to start counting the momentary pause period of time T2 at step S85.

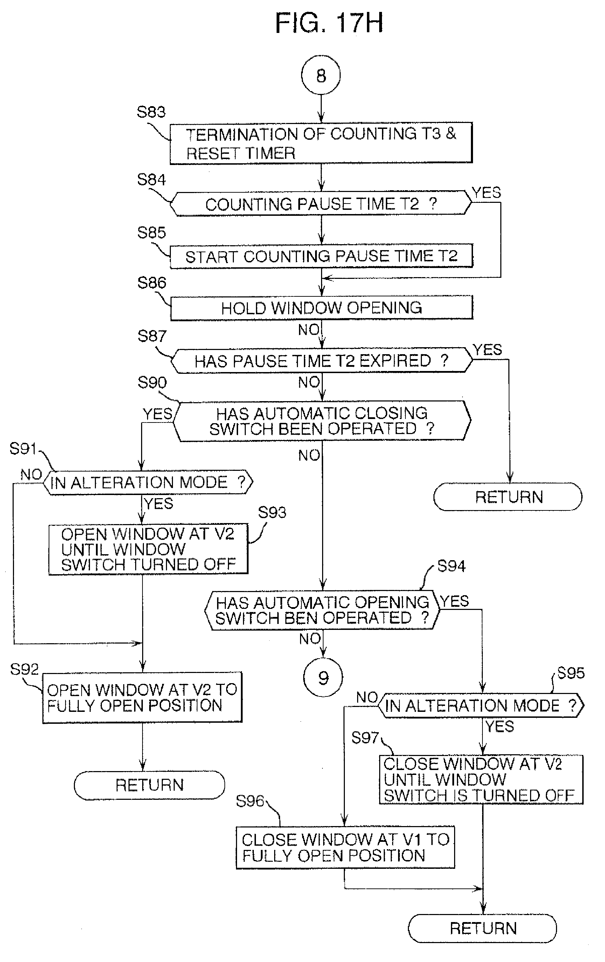

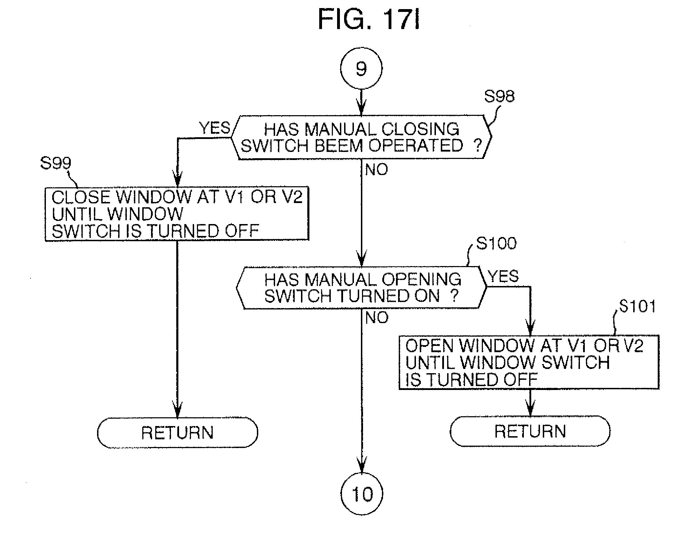

Until the momentary pause period of time T2 has expired, the sequence logic proceeds to a decision block at step S90 (Figure 17H) following the negative answer to the decision as to expiration of the momentary pause period of time T2 made at step S84. On the other hand, when the answer to the decision made at step S87 turns affirmative, this indicates that the momentary pause period of time T2 has expired, then, the sequence logic returns for another decision at step S1.

Further, when the answer to the decision as to the window glass position made at step S71 negative, this indicates that the window glass 1a is out of the fully closed position, then, a decision is made at step S88 as to whether the manual window opening switch 3 is in operation. When the answer is affirmative, the sequence logic returns for another decision at step S1 after keeping down movement of the window glass 1a at step S89. On the other hand, when the answer is negative, the sequence logic returns immediately for another decision at step S1.

Figures 17H and 17I show a part of the preparatory window opening control for giving priority to operations of the manual window closing switch 2, the manual window opening switch 3, the automatic window closing switch 4 and the automatic window opening switch 5 when they are operated during progress of the momentary pause period of time T2.

When the sequence logic proceeds to a decision block at step S90, a decision is made as to whether the automatic window opening switch 5 has been operated. When the answer is affirmative, a decision is further made at step S91 as to whether it is in the mode for alteration of the specified preparatory opening distance L. When the answer is negative, after moving down the window glass 1a to the fully open position at the speed V2 at step S92, the sequence routine returns for another decision at step S1. On the other hand, when the answer is affirmative, after moving down the window glass 1a until the automatic window opening switch 5 is released at step S93, the sequence logic returns for another decision at step S1.

On the other hand, when the answer to the decision as to the automatic window opening switch 5 made at step S90 is negative, a decision is further made at step S94 as to whether the automatic window closing switch 4 has been operated. When the answer is affirmative, a decision is further made at step S95 as to whether it is in the mode for alteration of the specified preparatory opening distance L. When the answer is negative, after moving up the window glass 1a to the fully closed position at the ordinary speed V1 at step S96, the sequence logic returns for another decision at step S1. On the other hand, the answer is affirmative, after moving up the window glass 1a until the automatic window closing switch 4 is released at step S97, the sequence logic returns for another decision at step S1. On the other hand, when the answer to the decision as to the automatic window closing switch 4 made at step S94 is negative, a decision is further made at step S98 as to whether the manual window closing switch 2 has been operated. When the answer is affirmative, after moving up the window glass 1a at the speed V1 or V2 until the manual window closing switch 2 is released at step S99, the sequence logic returns for another decision at step S1. When the answer is negative, a decision is further made at step S100 as to whether the manual window opening switch 3 has been released. When the answer is affirmative, after moving down the window glass 1a at the speed V1 or V2 until the manual window opening switch 3 is released at step S101, the sequence logic returns for another decision at step S1. On the other hand, when the answer is negative, the sequence logic returns for another decision as to the pause inhibition period of time T3 at step S74 (Figure 17G).

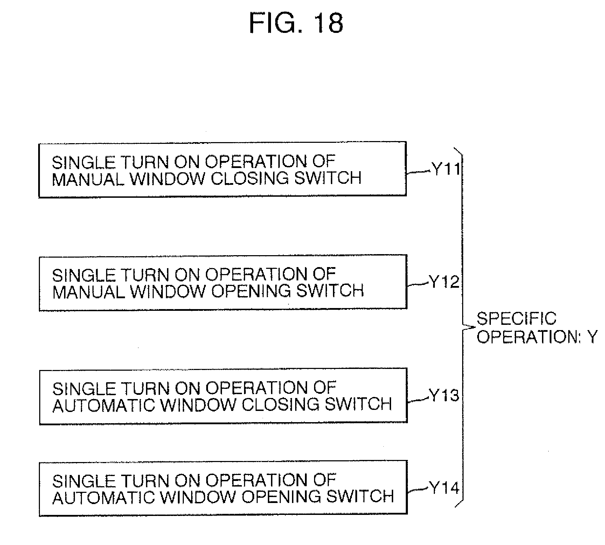

Figure 18 shows another specific operation Y forming a part of the specific operation B for the mode change function of changing a mode from the execution mode (I) or (II), or the cancellation mode (II) to the cancellation mode (I). As shown, the specific operation Y comprises single turn on operations of the manual window closing switch 2 (Y11), the manual window opening switch 3 (Y12), the automatic window closing switch 4 (Y13) and the automatic window opening switch 5 (Y14) made consecutively in this order. This variant can be incorporated into the window opening/closing control system of the above embodiment with the same operation and effect.

## Claims

1. A window opening control system for a vehicle including an opening/closing member (1a) for opening and closing a window (1) of the vehicle (100), opening/closing means (16) for causing opening/closing movement of the opening/closing member (1a), manually operated switch means (2-5 and 10) for causing the opening/closing movement of the opening/closing member (1a), opening detection means (8, 9) for detecting an opening of the opening/closing member (1a), and control means (12) for controlling said opening/closing means (16) to cause said opening/closing movement of the opening/closing member (1a) according to operations of said manually operated switch means (2-5 and 10) and said opening detected by said position detection means (8, 9),
**characterised in that**:
said control means (12) controls said opening/closing means (16) to stop for a momentary pause of movement of the opening/closing member (1a) for a specified pause period of time or to completely halt of movement of the opening/closing member (1a) at a specified opening at one try of operations of said manually operated switch means (2-5 and 10) and changes said specified opening according to a specific first operation.

2. A window opening control system as claimed in claim 1, **characterised in that** said control means (12) performs said changes in said specified opening according to said specified first operation when said specified first operation is commenced at a point of time before expiration of a specified first period of time after a specified second operation different from said specified first operation and interrupts said changes in said specified opening according to said specified first operation when said specified first operation is commenced at a point of time out of said specified first period of time after said specified second operation.

3. A window opening control system as claimed in claim 1 or 2, **characterised in that** said control means (12) performs said change in said specified opening according to said specified first operation when a specified third operation different from said specified first operation is commenced at a point of time before expiration of a specified second period of time after said specified first operation and interrupts said change in said specified opening according to said specified first operation when said specified third operation is commenced at a point of time out of said specified second period of time after said specified first operation.

4. A window opening control system as claimed in any one of the preceding claims 1 to 3, **characterised in that** said control system performs said change in said specified opening only when said specified first operation is commenced at a point of time before expiration of said specified first period of time after said specified second operation and said specified third operation is made before expiration of said specified second period of time after said specified first operation.

5. A window opening control system as claimed in any one of the preceding claims 1 to 4, **characterised in that** at least one of said specified first to third operations is made through said manually operated switch means (2-5 and 10).

6. A window opening control system as claimed in any one of the preceding claims 3 to 5, **characterised in that** said specified second and third operations are the same operation.

7. A window opening control system as claimed in claim 1, **characterised in that** said control means changes said specified pause period of time during operation of said specified first operation.

8. A window opening control system as claimed in claim 7, **characterised in that** said control means changes a speed pf said opening movement of said opening/closing member (16) greater during said specified first operation than during an absence of said specified first operation.

9. A window opening control system as claimed in any one of the preceding claims 1 to 8, **characterised in that** said control means alters a pause mode, according to a specified fourth operation, between a pause suspension mode in which said momentary pause is cancelled and a pause change mode in which said specified momentary pause period is changed

10. A window opening control system as claimed in claim 9, **characterised in that** said specified fourth operation is made through said manually operated switch means (2-5 and 10).

11. A window opening control system as claimed in any one of the preceding claims 1 to 10, **characterised in that** said control means (12) replaces said specified opening changed through said specified first operation with a predetermined lower limit opening when said specified opening is smaller that said predetermined lower limit opening or with a predetermined upper limit opening when said specified opening is larger that said predetermined upper limit opening.

12. A window opening control system as claimed in any one of the preceding claims 1 to 11, **characterised in that** said opening/closing member is a window glass of a door window of the vehicle.

13. A window opening control system as claimed in any one of the preceding claims 1 to 10, **characterised in that** said opening/closing member is a roof window of the vehicle.
